Europäisches Patentamt

European Patent Office

Office européen des brevets

(11) Veröffentlichungsnummer: **0 097 800**
**B1**

# EUROPÄISCHE PATENTSCHRIFT

(45) Veröffentlichungstag der Patentschrift:
08.03.89

(21) Anmeldenummer: **83104616.4**

(22) Anmeldetag: **11.05.83**

(51) Int. Cl.⁴: **F 16 J 15/40**, F 16 J 15/34

(54) Wellendichtung mit aktiv-magnetisch geregeltem Dichtspalt.

(30) Priorität: **25.06.82 DE 3223744**

(43) Veröffentlichungstag der Anmeldung:
**11.01.84 Patentblatt 84/2**

(45) Bekanntmachung des Hinweises auf die Patenterteilung:
**08.03.89 Patentblatt 89/10**

(84) Benannte Vertragsstaaten:
**CH DE FR GB IT LI NL**

(56) Entgegenhaltungen:
**DE-A-2 515 316**
**US-A-3 025 070**

(73) Patentinhaber: **MAN GUTEHOFFNUNGSHÜTTE GMBH, Bahnhofstrasse, 66 Postfach 11 02 40, D-4200 Oberhausen 11 (DE)**

(72) Erfinder: **Albers, Rolf, Dinnendahlstrasse 61, D-4200 Oberhausen 11 (DE)**
Erfinder: **Aschenbruck, Emil, Sterkrader Strasse 495a, D-4100 Duisburg 11 (DE)**
Erfinder: **Neuhaus, Günter, Walsumermarkstrasse 254, D-4200 Oberhausen 14 (DE)**
Erfinder: **Kotzur, Joachim, Dr.- Ing., Holtkampstrasse 18, D-4200 Oberhausen 11 (DE)**

LIBER, STOCKHOLM 1989

## Beschreibung

Die Erfindung bezieht sich auf eine Wellendichtung mit radialem ebenen Dichtspalt, der von einem mit der Welle umlaufenden Dichtring und einem über ein axial nachgiebiges und zugleich dichtendes Element am Dichtungsgehäuse befestigten nichtumlaufenden Dichtring gebildet wird, wobei das Dichtungsmedium durch Zuführbohrungen und zugehörige Verteilungstaschsen im nicht umlaufenden Dichtring und/oder am äußeren oder inneren Umfang des umlaufenden Dichtringes in den Dichtspalt strömt, und im nichtumlaufenden Dichtring auf der Dichtspaltseite Sensoren zur Messung des Dichtspalts angeordnet sind, mit denen im Dichtungsgehäuse angeordnete Elektromagnete elektronisch so geregelt werden, daß diese im Zusammenwirken mit magnetisierbaren Gegenkörpern am nichtumlaufenden Dichtring einen bestimmten Dichtspalt an jeder Stirnseite des umlaufenden Dichtringes konstant halten.

Eine Dichtung dieser Art ist aus der DE-C-3 221 380 bekannt. Diese Wellendichtung ermöglicht die Aufrechterhaltung eines engen Dichtspalts bei allen Drehzahlen und unabhängig vom Druck des Dichtungsmediums, dessen Leckraten dadurch klein gehalten werden.

Bei der Ausbildungsweise der Wellendichtung nach der o. g. Patentanmeldung befindet sich der Dichtspalt vorzugsweise zwischen einer Stirnseite des umlaufenden Dichtringes und dem zugeordneten nichtumlaufenden Dichtring, wobei der Dichtspalt durch elektronisch geregelte Elektromagneten konstant gehalten wird. Es kann auch an jeder Stirnseite des umlaufenden Dichtringes ein Dichtspalt angeordnet sein, wenn für die Wellendichtung zwei unterschiedliche Dichtungsmedien eingesetzt werden oder eine Druckstufung des Dichtungsmediums vorgesehen ist. Diese Doppeldichtung besteht aus zwei kompletten Dichtsystemen, deren Platzbedarf beträchtlich ist und die hinsichtlich der elektronischen Regelung einen hohen Aufwand erfordern.

Die Aufgabe der Erfindung besteht daher darin, die Wellendichtung so weiter auszubilden, daß unter Beibehaltung eines konstant geregelten Dichtspalts an jeder Stirnseite des umlaufenden Dichtringes sowie der Möglichkeit des Einsatzes unterschiedlicher Dichtungsmedien die Abmessungen der Wellendichtung reduziert werden und der Aufwand für die Regelung geringer wird.

Die Lösung dieser Aufgabe erfolgt bei einer Wellendichtung der anfangs angegebenen Art dadurch, daß der nichtumlaufende Dichtring den umlaufenden Dichtring auf beiden Stirnseiten und umfangseitig umschließt und radial abgestützt ist.

Der dadurch erreichbare Vorteil besteht darin, daß der nichtumlaufende Dichtring von nur einem elektronisch gesteuerten Magnetsystem geregelt werden kann. Damit verbunden ist gegenüber der Doppeldichtung nach dem Hauptpatent, eine Einsparung an Platzbedarf und Aufwand für ein komplettes Regelsystem.

Nach einer Ausgestaltung der Erfindung kann der nichtumlaufende Dichtring aus zwei die Sensoren aufnehmenden Stirnringen und einem die Stirnringe starr miteinander verbinenden Umfangsring bestehen.

Der nichtumlaufende Dichtring wird im Normalfall mit den in DE-C-3 221 380 genannten Mitteln in seiner radialen Lage gehalten. In bestimmten Fällen kann jedoch eine feste radiale Führung zweckmäßig sein. Dazu kann der nichtumlaufende Dichtring radial in einer im Dichtungsgehäuse angeordneten Führungsbuchse axialbeweglich gelagert sein, wobei die einander berührenden Flächen eine sehr hohe Oberflächengüte aufweisen. Für die Zu- und/oder Ableitung des Dichtungsmediums kann die Führungsbuchse am inneren Umfang mit Ringkanälen versehen sein, in die Bohrungen einmünden.

Dabei kann wahlweise eine Bohrung der gemeinsamen Zuführung des Dichtungsmediums für beide Dichtspalte dienen oder getrennte Bohrungen für jeden Dichtspalt bei Verwendung unterschiedlicher Dichtungsmedien. Eine der Bohrungen kann für die Ableitung des Dichtungsmediums verwandt werden. Aufgrund der glatten Oberflächen von Führungsbuchse und nichtumlaufendem Dichtring treten an dieser Stelle Verluste an Dichtungsmedium praktisch nicht auf.

Nach einer weiteren Ausgestaltung der Erfindung können die im Dichtungsgehäuse befindlichen Elektromagnete und das nachgiebige und dichtende Element auf sich gegenüberliegenden Stirnseiten des nichtumlaufenden Dichtringes angeordnet sein. Das nachgiebige und dichtende Element zwischen dem Gehäuse und dem nichtumlaufenden Dichtring dichtet den Verfahrensraum der Maschine gegenüber der Wellendichtung ab. Daher sind die auf der gegenüberliegenden Seite über den Umfang des nichtumlaufenden Dichtringes verteilten, im Dichtungsgehäuse angeordneten Elektromagnete dem im Verfahrensraum befindlichen Medium nicht ausgesetzt. Das ist besonders vorteilhaft, wenn das Verfahrensmedium aggressiv ist.

Von den Elektromagneten, die den elektronisch übermittelten Impuls der abstandsmessenden in beiden Stirnringen angeordneten Sensoren erhalten, wird der nichtumlaufende Dichtring derart geregelt, daß die Spaltweite auf beiden Seiten stets gleich ist, d. h. der umlaufende Dichtring symmetrisch in dem ihn umgebenden nichtumlaufenden Dichtring umläuft.

Die Erfindung ist anhand eines Ausführungsbeispiels in der Zeichnung dargestellt und im folgenden näher erläutert.

Es zeigt die

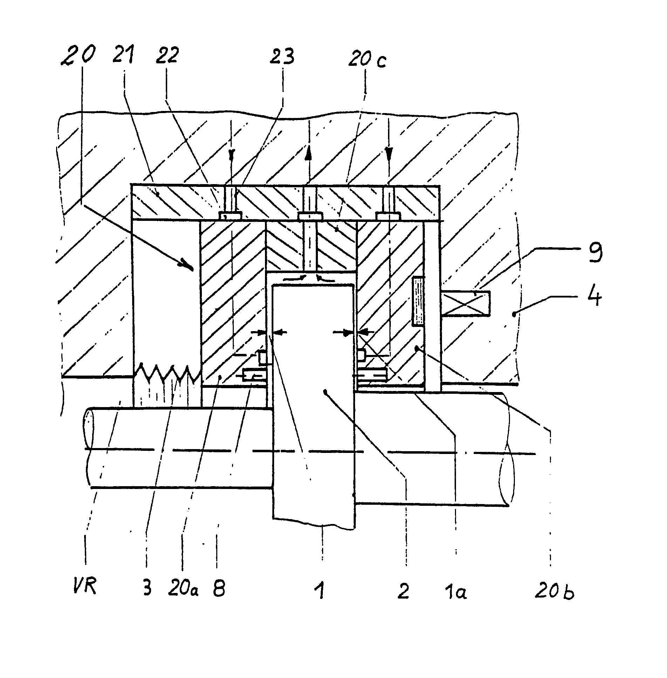

Figur 1, einen Schnitt durch die Wellendichtung.

Der mit der Welle umlaufende Dichtring 2 ist von dem nichtumlaufenden Dichtring 20 auf beiden Stirnseiten und umfangsseitig umschlossen. Dabei ist das lichte Maß zwischen den beiden Stirnringen 20a und 20b um das auf beiden Seiten vorgegebene Spaltmaß 1, 1a größer als die Breite des umlaufenden Dichtringes 2. Die Stirnringe sind durch den Umfangsring 20c starr miteinander verbunden. Zur radialen Lagerung des nichtumlaufenden Dichtringes 20 ist im Dichtungsgehäuse 4 die Führungsbuchse 21 angeordnet. Der Zu- und Ableitung des Dichtungsmediums dienen am inneren Umfang vorhandene Ringkanäle 22, in die Bohrungen 23 einmünden. In den Stirnringen 20a und 20b des nichtumlaufenden Dichtringes 20 sind die abstandsmessenden Sensoren 8 eingelassen, deren Impulse elektronisch auf die Elektromagnete 9 übertragen werden, die die Spaltweiten 1 und 1a konstant halten. Die Elektromagnete 9 sind im Dichtungsgehäuse auf der dem nachgiebigen und dichtenden Element 3 gegenüberliegenden Stirnseite des nichtumlaufenden Dichtringes 20 angeordnet und somit vom Verfahrensraum VR getrennt.

## Patentansprüche

1. Wellendichtung mit radialem ebenen Dichtspalt, der von einem mit der Wele umlaufenden Dichtring (2) und einem über ein axial nachgiebiges und zugleich dichtendes Element (3) am Dichtungsgehäuse befestigten nichtumlaufenden Dichtring (20) gebildet wird, wobei das Dichtungsmedium durch Zuführbohrungen (23) und zugehörige Verteilungstaschen im nichtumlaufenden Dichtring und/oder am äußeren oder inneren Umfang des umlaufenden Dichtringes in den Dichtspalt (1, 1a) strömt, und im nichtumlaufenden Dichtring auf der Dichtspaltseite Sensoren (8) zur Messung des Dichtspalts angeordnet sind, mit denen im Dichtungsgehäuse angeordete Elektromagnete (9) elektronisch so geregelt werden, daß diese im Zusammenwirken mit magnetisierbaren Gegenkörpern am nichtumlaufenden Dichtring (20) einen bestimmten Dichtspalt an jeder Stirnseite des umlaufenden Dichtringes (2) konstant halten,
dadurch gekennzeichnet,
daß der nichtumlaufende Dichtring (20) den umlaufenden Dichtring (2) auf beiden Stirnseiten und umfangseitig umschließt und radial abgestützt ist.

2. Wellendichtung nach Anspruch 1,
dadurch gekennzeichnet,
daß der nichtumlaufende Dichtring (20) aus zwei die Sensoren (8) aufnehmenden Stirnringen (20a, 20b) und einem die Stirnringe starr miteinander verbindenden Umfangsring (20c) besteht.

3. Wellendichtung nach Anspruch 1 und 2,
dadurch gekennzeichnet,

daß der nichtumlaufende Dichtring (20) radial in einer im Dichtungsgehäuse (4) angeordneten Führungsbuchse (21) axial beweglich gelagert ist.

4. Wellendichtung nach Anspruch 3,
dadurch gekennzeichnet,
daß die Führungsbuchse (21) am inneren Umfang mit Ringkanälen 22 versehen ist, in die Bohrungen (23) für die Zu- und/oder Ableitung des Dichtungsmediums einmünden.

5. Wellendichtung nach Ansprüchen 1 - 4,
dadurch gekennzeichnet,
daß die im Dichtungsgehäuse (4) befindlichen Elektromagnete (9) und das nachgiebige und dichtende Element (3) auf sich gegenüberliegenden Stirnseiten des nichtumlaufenden Dichtringes (20) angeordnet sind.

## Claims

1. Shaft seal with a radial flat seal gap which is defined by a sealing ring (2) rotating with the shaft and a non-rotating sealing ring (20) secured to the seal housing by means of an axially yielding and also sealing element (3), whereby the sealing medium flows into the seal gap (1, 1a) through supply bores (2b) and associated distribution pockets in the non-rotating sealing ring and/or on the outer or inner periphery of the rotating sealing ring and sensors (8) for measuring the seal gap are disposed in the non-rotating sealing ring on the seal gap side, with which sensors electromagnets (9) disposed in the seal housing are electronically controlled so that in cooperation with magnetisable opposing bodies on the non-rotating sealing ring (20) they maintain a certain seal gap at each end face of the rotating sealing ring (2) constant,
characterised in that
the non-rotating sealing ring (20) surrounds the rotating sealing ring (2) at both end faces and peripherally and is radially supported.

2. Shaft seal as claimed in claim 1,
characterised in that
the non-rotating sealing ring (20) comprises two end rings (20a, 20b) receiving the sensors (8) and a peripheral ring (20c) connecting the end rings rigidly together.

3. Shaft seal as claimed in claims 1 and 2,
characterised in that
the non-rotating sealing ring (20) is radially supported so as to be axially movable in a guide bush (21) disposed in the seal housing (4).

4. Shaft seal as claimed in claim 3,
characterised in that
the guide bush (21) is provided on its inner periphery with annular passages (22) with which the bores (23) for the supply and/or discharge of the sealing medium communicate.

5. Shaft seal as claimed in claims 1 - 4,
characterised in that
the electromagnets (9) situated in the seal housing (4) and the yielding and sealing element (3) are arranged on opposing end faces of the non-rotating sealing ring (20).

## Revendications

1. Joint d'étanchéité pour arbre avec un interstice d'étanchéité radial plan, qui est délimité par un anneau d'étanchéité (2) tournant avec l'arbre et par un anneau d'étanchéité (20) ne tournant pas et fixé au boîtier du joint d'étanchéité, par l'intermédiaire d'un élément (3), cédant axialement et exerçant en même temps un effet d'étanchement, le fluide d'étanchéité s'écoulant dans l'interstice d'étanchéité (1, 1a) par des perçages d'alimentation (23) et des poches de répartition qui leur sont associées dans l'anneau d'étanchéité non tournant et/ou sur la périphérie externe ou la périphérie interne de l'anneau d'étanchéité tournant, tandis que sur l'anneau d'étanchéité ne tournant pas, des détecteurs (8) sont disposés sur le côté de l'interstice d'étanchéité pour mesurer cet interstice d'étanchéité, détecteur grâce auquel des électro-aimants, disposés dans le boîtier du joint d'étanchéité, sont réglés électroniquement de façon que ces électro-aimants, en coopération avec des structures antagonistes magnétisables sur l'anneau d'étanchéité non tournant (20), maintiennent constant, sur chacune des faces de l'anneau d'étanchéité tournant (2), un interstice d'étanchéité déterminé, joint d'étanchéité caractérisé en ce que l'anneau d'étanchéité non tournant (20) entoure l'anneau d'étanchéité tournant (2) sur ses deux faces frontales et sur sa face périphérique, et est soutenu radialement.

2. Joint d'étanchéité pour arbre selon la revendication 1, caractérisé en ce que l'anneau d'étanchéité non tournant (20) est constitué par deux anneaux frontaux (20a, 20b) recevant les détecteurs (8), et par un anneau périphérique (20c) reliant rigidement entre eux les anneaux frontaux.

3. Joint d'étanchéité selon les revendications 1 et 2, caractérisé en ce que l'anneau d'étanchéité non tournant (20) est maintenu radialement dans une bague de guidage (21) disposée dans le boîtier (4) du joint d'étanchéité, et dans laquelle il est mobile axialement.

4. Joint d'étanchéité pour arbre selon la revendication 3, caractérisé en ce que la douille de guidage (21) est munie sur sa périphérie interne de canaux annulaires (22) dans lesquels débouchent les perçages (23) pour amener et/ou évacuer le fluide d'étanchéité.

5. Joint d'étanchéité pour arbre selon les revendications 1 à 4, caractérisé en ce que les électro-aimants (9) se trouvant dans le boîtier (4) du joint d'étanchéité, et l'élément (3), cédant axialement et exerçant une action d'étanchement, sont disposés sur les faces frontales opposées de l'anneau d'étanchéité non tournant (20).